# FASCICULE DE BREVET EUROPEEN

(11) **EP 3 898 062 B1**
(45) Date de publication et mention de la délivrance du brevet: **06.12.2023**
(21) Numéro de dépôt: 19848985.8
(22) Date de dépôt: 23.12.2019
(51) Int. Cl.: B23K 26/046, B23K 26/0622, B23K 26/06, B23K 26/082, B23K 26/08, B23K 26/38, B23K 101/32, B23K 103/00

(54) **PROCÉDÉ DE TRAITEMENT DE SURFACE PAR LASER**
VERFAHREN ZUR LASERBEHANDLUNG VON OBERFLÄCHEN
METHOD FOR LASER TREATMENT OF SURFACES

(30) Priorité: 21.12.2018 FR 1873723
(43) Date de publication de la demande: 27.10.2021
(73) Titulaire: EFI Lighting, 01700 Miribel (FR)
(72) Inventeur: NOULETTE, Jacques, 38290 Frontonas (FR); BROCHIER, Cédric, 69007 Lyon (FR); PICOT-CLEMENTE, Jérémy, 69120 Vaulx En Velin (FR); MORANGE, Julien, 69140 Rillieux La Pape (FR)
(74) Mandataire: Cabinet Laurent & Charras
(86) Numéro de dépôt international: PCT/FR2019/053283
(87) Numéro de publication internationale: WO 2020/128407

(56) Documents cités:
- WO-A2-2008/087339
- JP-A- S63 188 485
- US-A1- 2016 193 698
- US-A1- 2018 185 891

## Description

L'invention se rapporte au domaine du traitement de surface par laser et concerne plus particulièrement un procédé de traitement d'une surface sensiblement plane d'un objet tel qu'une plaque.

L'invention permet d'altérer la surface extérieure des fibres optiques par retrait de matière en vue d'obtenir des fibres optiques à diffusion/réception latérale.

### Technique antérieure

Dans certains domaines, par exemple dans la réalisation d'objet lumineux, tel qu'un textile lumineux, il peut être intéressant d'utiliser des fibres optiques à diffusion latérale. Une telle fibre optique présente sur sa surface extérieure des altérations ou aspérités autorisant la lumière injectée dans la fibre à s'échapper au travers de ces altérations. De telles altérations peuvent être obtenues par différentes techniques de traitement de surface, par exemple par traitement thermique, chimique ou mécanique, et en particulier via des procédés d'abrasion par sablage ou par faisceaux laser.

Le procédé de traitement par faisceaux laser utilise un faisceau laser focalisé permettant un échauffement localisé sur les zones à traiter.

Parmi les machines lasers adaptées notamment pour la gravure ou la découpe de matériau, on distingue les machines de type traceur laser (ou plotter laser) et les machines de type laser à tête galvanométrique, qui se différencient essentiellement dans la manière de diriger les faisceaux laser sur la surface à traiter contenue dans un plan XY défini par deux axes X et Y perpendiculaires entre eux.

Généralement, dans une machine de type traceur laser, le faisceau laser reçu par la tête laser est dévié le long des axes X et Y du plan, au moyen de miroirs fixes. Le faisceau est mis au point par une lentille et est dirigé de manière verticale sur la surface à traiter. En fonction de la surface à traiter, les dimensions du traceur laser peuvent donc être conséquentes.

Dans une machine laser galvanométrique, le faisceau laser reçu par la tête laser est dirigé de façon contrôlée via un ensemble de miroirs entraînés en mouvement par un système d'entraînement galvanométrique. Typiquement, deux miroirs galvanométriques peuvent être utilisés. L'un des miroirs est configuré pour contrôler le faisceau dans la direction de l'axe X et l'autre miroir est configuré pour contrôler le faisceau dans la direction de l'axe Y. Dans la mesure où le mouvement des miroirs peut être très rapide, le faisceau laser peut être guidé au-dessus de la pièce à usiner à des vitesses élevées. La taille de la surface de traitement est généralement définie par l'angle de déviation et la focale des optiques. Cependant, le point focal étant le point où la densité de puissance du faisceau est la plus importante, la qualité de la découpe ou de la gravure reste donc sensible aux variations de la position du point focal du faisceau par rapport à la surface à traiter. Or, la position du point focal dans un plan perpendiculaire à une surface plane à traiter suit généralement une ligne courbe correspondant au mouvement du miroir galvanométrique en mouvement dans ce plan. De ce fait, la distance du point focal par rapport à la surface plane varie et la densité de puissance réellement appliquée sur la surface plane n'est donc pas identique en tout point de cette surface. Une solution choisie par certains constructeurs consiste à modifier les optiques de la tête laser, et notamment à intégrer une lentille de correction du plan de focalisation, de manière à réduire la dérive du point focal par rapport à la surface à usiner, quel que soit le mouvement de la tête laser. Malgré cette correction, il existe toujours une faible variation de la distance du point focal sur la surface plane et qui se traduit donc par une variation de la densité de puissance appliquée sur la surface traitée.

Cette correction matérielle est généralement suffisante pour les applications usuelles, telles que découpe ou gravure, qui acceptent certaines tolérances dans le positionnement du point focal par rapport à la surface à usiner, tout en permettant d'obtenir un visuel ou un résultat final acceptable.

Concernant les fibres optiques destinées à la réalisation de textiles lumineux, on cherche généralement à réaliser des altérations qui permettent d'obtenir une excellente homogénéité de la luminance sur l'ensemble de la surface des fibres optiques ou sur l'ensemble d'une face du textile lumineux. Or, certaines fibres optiques peuvent avoir une gaine de très faible épaisseur, de l'ordre de quelques microns. De ce fait, une légère variation de la distance du point focal par rapport à la surface à traiter se traduit par une variation de la qualité des aspérités le long de la fibre optique et donc une perte de l'homogénéité recherchée. Le traitement laser des fibres optiques doit donc être réalisé avec précision. Une correction matérielle induirait un coût non négligeable du fait du prix des optiques de précision et nécessiterait une modification matérielle importante et complexe.

### Présentation de l'invention

La présente invention vise donc à proposer une solution améliorant la précision et l'homogénéité surfacique du traitement laser de la surface des fibres optiques et/ou d'autres matériaux nécessitant une précision et/ou homogénéité importante, via notamment une machine laser à tête galvanométrique. Un autre objectif de l'invention est de proposer une solution qui autorise une plus grande flexibilité quant à la taille de la surface à traiter, tout en garantissant une finesse de gravure sur l'ensemble de la surface à traiter.

L'invention a pour objet un procédé de traitement par laser d'une surface sensiblement plane d'un produit tel que défini dans la revendication 1, le procédé comprenant entre autre :
- la disposition du produit sur une table d'usinage située dans un plan XY défini par un premier axe X et un deuxième axe Y perpendiculaire au premier axe X ;
- le positionnement d'une tête laser à l'aplomb d'un point de référence de la table d'usinage, la tête laser étant configurée pour générer des faisceaux à une fréquence prédéterminée et comprenant au moins un système optique rotatif configuré pour diriger de façon contrôlée ces faisceaux vers la table d'usinage;
- le traitement de l'ensemble de ladite surface à traiter du produit par application de ces faisceaux sur la surface à traiter simultanément au mouvement du système optique suivant des paramètres laser prédéterminés.

Selon l'invention, la surface à traiter est divisée en une pluralité de zones élémentaires dans le plan XY, et le procédé comprend en outre l'application d'une correction consistant à faire varier un ou une combinaison des paramètres laser suivants, en fonction de la position de chaque zone élémentaire dans le plan XY:
- la puissance des faisceaux ;
- la vitesse de déplacement du système optique ;
- la fréquence d'impulsion des faisceaux.

Plus précisément, toutes les zones élémentaires selon l'axe Y de la surface à traiter reçoivent une énergie moyenne prédéterminée sensiblement identique. En pratique, toutes les zones élémentaires présentent une surface sensiblement identique. En outre, le laser peut être configuré pour fonctionner en régime continu ou en régime impulsionnel.

En d'autres termes, les paramètres laser tant sur l'axe X que sur l'axe Y, sont asservis en fonction de de la position de la zone élémentaire dans le plan XY et du rendu visuel final que l'on souhaite obtenir. Le rendu visuel homogène peut notamment se traduire par une énergie moyenne appliquée sensiblement homogène dans l'axe Y entre les différentes zones élémentaires.

Comme indiqué ci-dessus, avec les têtes laser galvanométriques, malgré la correction matérielle, la faible variation de la distance du point focal par rapport à la surface à usiner se traduit par une dérive de la densité de puissance appliquée sur cette surface, et donc un traitement non-uniforme. Pour corriger cela, l'invention propose, non pas une nouvelle correction matérielle tendant à améliorer la focalisation du faisceau sur l'ensemble de la surface à traiter, mais l'application d'un masque de correction des paramètres de contrôle de la tête laser sur au moins l'un des axes de la surface à usiner, de manière à compenser les variations résiduelles de la densité de puissance résultant du matériel optique implanté dans la tête laser, et ce sur toute la surface à usiner. Ainsi, la correction des paramètres laser est réalisée de préférence sur l'un ou les deux axes X et Y du plan XY.

En pratique, le système optique comprend notamment deux miroirs galvanométriques. Un premier miroir est configuré pour pivoter autour d'un premier axe de pivot Px pour contrôler les faisceaux suivant le premier axe X et un deuxième miroir est configuré pour pivoter autour d'un deuxième axe de pivot Py pour contrôler les faisceaux suivant le deuxième axe Y. Ainsi, le faisceau arrivant sur le plan XY se présentant sous la forme d'un spot, la position du faisceau (ou spot) sur le plan XY, et donc la taille du faisceau (ou spot) sur le plan XY, est corrélée à la position angulaire des miroirs, et notamment du premier miroir pour la position suivant l'axe X et du deuxième miroir pour la position suivant l'axe Y. L'énergie moyenne appliquée sur un point du plan XY étant corrélée à la taille du faisceau (ou au diamètre du spot) sur ce point du plan XY, il est également possible de faire varier les paramètres de puissance et/ou de fréquence d'impulsion en fonction de la position angulaire de chacun des miroirs.

Ainsi, le faisceau sortant de la tête laser est dirigé via un système optique rotatif, c'est-à-dire que le faisceau laser peut ne pas arriver perpendiculairement sur la zone à traiter, excepté bien entendu lorsque le faisceau est dirigé au centre de la surface de traitement, dans l'axe du laser. En d'autres termes, l'angle d'incidence du faisceau sur la zone à traiter diffère en fonction de la position de la zone à traiter. Un angle d'incidence important occasionne une perte de puissance plus importante sur la surface à traiter. De ce fait, la correction appliquée aux paramètres laser est asservie à l'angle d'incidence du faisceau ou encore à la position de la zone à traiter ou encore à la position angulaire des miroirs.

Usuellement, le point de référence correspond au centre de la table d'usinage situé perpendiculairement à la fenêtre d'émission du laser, et le faisceau peut être initialement focalisé sur ce point de référence. De ce fait, la densité de puissance appliquée sur la surface à traiter diminue au fur et à mesure de l'éloignement du faisceau de ce point de référence. L'application du masque de correction vient compenser cette dérive de la puissance. Le masque peut se présenter sous différentes formes, comme par exemple sous la forme de tables, de matrices ou de courbes donnant les valeurs corrigées des différents paramètres laser à appliquer en fonction de la position des zones élémentaires à traiter dans le plan XY. Par exemple, le masque de correction peut être sous la forme d'une matrice de nuance de gris définissant un pourcentage de la puissance maximale du laser à utiliser.

En pratique, l'énergie moyenne reçue par une zone élémentaire sur un temps t est fonction notamment de la vitesse de mouvement du système optique (et donc la vitesse de déplacement des différents composants du système optique permettant de diriger les faisceaux laser), du diamètre du spot sur la surface à traiter ou encore de la fréquence du laser. En effet, pour un même diamètre de spot, on comprend que l'énergie moyenne reçue par une zone sur un temps t est plus importante lorsque le mouvement du système optique est plus lent. Le diamètre du spot n'étant pas modifiable car intrinsèque au matériel optique implanté dans la tête laser, l'énergie moyenne reçue par la zone élémentaire peut donc par exemple être ajustée en jouant sur la vitesse de déplacement du système optique, sur l'axe X et/ou sur l'axe Y.

Le procédé de l'invention définit le traitement surfacique de fibres optiques disposées sur la table d'usinage sous la forme d'une nappe textile, et convient tout particulièrement au traitement par une tête laser galvanométrique présentant par exemple des dérives de la position du point focal de l'ordre de quelques dizaines de millimètres (environ 50 mm) pour des surfaces de travail de l'ordre de 800x800mm. L'application de la correction selon l'invention a notamment pour but d'obtenir une nappe textile présentant une diffusion homogène de la lumière sur toute sa surface. En particulier, l'homogénéité de la diffusion de la lumière sur la surface de la nappe textile peut être évaluée par mesure de la variation d'intensité de la lumière diffusée entre le centre et le bord de la nappe textile. De préférence, une variation de 5% maximum entre le bord et le centre de la nappe textile est souhaitable pour une surface de travail de 800x800mm.

Ainsi, selon l'invention, le produit est une nappe textile formée de fibres optiques maintenues parallèlement entre elles par des fils de liage. La nappe textile est positionnée centrée sur le point de référence. En outre, les fibres optiques sont positionnées sensiblement parallèlement au premier axe X de la table d'usinage. Ainsi, les faisceaux générés selon une fréquence prédéfinie et appliqués lors du traitement altèrent la surface des fibres optiques par retrait de matière.

En pratique, avec une tête laser galvanométrique classique, on remarque que les aspérités créées sur les fibres optiques sont différentes selon que la fibre optique est positionnée proche du centre ou des bords de la nappe textile, notamment suivant l'axe Y. Cela est d'autant plus visible que les dimensions de la nappe textile sont proches des dimensions maximales de travail recommandées par le constructeur, du fait de la dérive du diamètre du point focal par rapport à la surface à traiter, au fur et à mesure de l'éloignement du faisceau du point de référence ou du centre de la table.

Pour pallier ce problème, certains paramètres laser de la tête laser sont donc ajustés, tout en maintenant d'autres paramètres laser inchangés ou sensiblement constants, pour obtenir un résultat relativement homogène sur l'intensité lumineuse mesurée entre les fibres positionnées au centre et celles positionnées en bordure de la nappe selon Y. Par exemple, pour obtenir une variation maximum de la luminance de l'ordre de 5% entre le centre et les bords de la nappe textile selon l'axe Y notamment, on peut par exemple prévoir de régler les paramètres laser de manière à ce que la variation du diamètre du spot entre les bords et le centre de la nappe textile soit compensée par une augmentation de quelques pourcents de la puissance laser de traitement.

Selon une variante, la variation du diamètre du spot n'étant pas modifiable, l'énergie moyenne reçue par chaque zone élémentaire peut donc être ajustée en jouant sur la ou les vitesses de déplacement du système optique, sur l'axe X et/ou l'axe Y. De préférence, la vitesse de déplacement est décroissante au fur et à mesure de l'éloignement des zones du point de référence. En outre, la vitesse de déplacement du système optique dirigeant le faisceau sur l'axe X peut être différente ou sensiblement identique à la vitesse de déplacement du système optique dirigeant le faisceau laser sur l'axe Y.

Selon une autre variante, chaque zone élémentaire peut avoir des dimensions correspondant sensiblement au diamètre maximal du spot ou faisceau sur la surface à traiter. Ainsi, la correction peut consister à moduler la puissance à appliquer en fonction de la position de la zone élémentaire dans le plan XY, tout en maintenant des vitesses de déplacement du système optique sensiblement constante. De préférence, la puissance à appliquer est croissante au fur et à mesure de l'éloignement des zones du point de référence. Par exemple, la puissance laser émise et appliquée sur la surface de traitement hors programme de traitement peut être constante suivant l'axe X, et variable suivant l'axe Y.

Selon une autre variante, chaque zone élémentaire peut avoir des dimensions sensiblement égales au diamètre maximal du spot ou faisceau sur la surface à traiter. La correction peut consister à ajuster le nombre d'impacts ou la fréquence des impulsions en fonction de la position de la zone élémentaire à traiter dans le plan XY, la puissance de chaque faisceau étant constante et la vitesse de déplacement du système optique étant également constante. De préférence, le nombre d'impacts est croissant au fur et à mesure de l'éloignement des zones du point de référence.

Il est également possible d'envisager de moduler à la fois la puissance et la fréquence des impulsions, tout en maintenant une vitesse de déplacement du système optique constante.

La solution présentée permet ainsi d'adapter le traitement en fonction de la dimension de la surface à traiter, et permet donc de s'affranchir des limites dimensionnelles imposées par les caractéristiques matérielles de la tête laser. En fonction des dimensions de la surface à traiter, la compensation sur uniquement un des axes X et Y peut parfois suffire. Ainsi, la tête laser peut être déplacée en translation sur l'axe X et en mouvement pendulaire sur l'axe Y. Les paramètres laser relatif à l'axe X peuvent être constants et les paramètres laser relatif à l'axe Y peuvent être asservis en fonction de la position de la zone à traiter sur l'axe Y (et donc de l'angle d'incidence des faisceaux sur le plan Y ou de la position du miroir contrôlant le faisceau dans l'axe Y), puisque, comme explicité ci-avant, l'angle d'incidence du faisceau sur la zone à traiter diffère en fonction de la position de la zone à traiter sur l'axe considéré. Dans une autre variante, la tête laser peut être fixe en translation mais est en rotation (mouvement pendulaire) sur les deux axes X et Y. Pour traiter des fibres optiques de très grande longueur, c'est-à-dire s'étendant sur l'axe X, il est possible de corriger tout ou partie des paramètres laser pour appliquer sur la surface à traiter une densité de puissance constante sur l'axe Y et une densité de puissance variable sur l'axe X de manière à compenser l'éloignement de la zone à traiter sur l'axe X. En d'autres termes, après correction, la densité de puissance appliquée sur les différentes zones selon l'axe Y est constante et la densité de puissance appliquée entre les différentes zones selon l'axe X est variable. La densité de puissance est avantageusement plus importante à mesure que la zone à traiter s'éloigne du point de référence sur l'axe X.

Sur le même principe, il est possible d'obtenir une distribution variable mais contrôlée des altérations le long des fibres optiques de très grande longueur, en configurant les paramètres laser selon l'axe X et selon l'axe Y. Les caractéristiques des fibres optiques ainsi obtenues sont particulièrement adaptées pour la diffusion homogène de la lumière sur toute leur longueur lorsqu'une source de lumière est injectée dans la fibre via une de leur extrémité libre.

Il est également possible d'envisager une table d'usinage mobile en translation, notamment suivant l'axe X. Dans ce cas particulier, la tête laser est de préférence fixe en translation suivant les deux axes X et Y.

Selon un autre mode de réalisation, les fils de liage s'étendent sensiblement parallèlement à l'axe Y, et le procédé comprenant en outre une étape finale de sectionnement des fils de liage au niveau des lisières de la nappe textile.

La présente invention n'est donc pas un simple traitement laser d'une surface, mais est adaptée pour le traitement d'une surface constituée d'éléments en matériaux différents positionnés sur des plans différents dans la direction perpendiculaire à la table d'usinage. En effet, les fils de liage utilisés pour maintenir les fibres optiques de la nappe textile sont généralement en matériau textile, et chevauchent généralement tout ou partie des fibres optiques dans la direction selon l'axe Y. En d'autres termes, dans certaines zones élémentaires à traiter, la portion de fibre optique est positionnée sous la portion de fil de liage. Le faisceau laser doit donc être calibré pour limiter l'échauffement du fils de liage tout en assurant une énergie suffisante pour assurer le retrait de matière dans l'épaisseur de la gaine de la fibre optique. En pratique, une longueur d'onde d'émission laser impactant fortement les fibres optiques mais faiblement les fils textiles, est avantageusement privilégiée. Par exemple, un laser CO₂ à 10,6µm peut être utilisé. En d'autres termes, la correction appliquée aux paramètres laser tient également compte de l'obstacle formé par le fil de liage en matériau textile. Il est en effet nécessaire de ne pas sectionner les fils de liage en cours de traitement afin d'assurer le maintien des fibres optiques tout au long du traitement et de limiter les points sombres sur les fibres optiques occasionnés par des fils de liage échauffés.

Selon un mode de réalisation, les paramètres laser peuvent également être calibrés pour réaliser des aspérités aptes à laisser échapper des rayonnements lumineux de longueurs d'onde prédéfinie.

### Brève description des figures

D'autres caractéristiques et avantages de l'invention ressortiront clairement de la description qui en est faite ci-après, à titre indicatif et nullement limitatif, en référence aux dessins annexés, dans lesquels :
[Fig 1A] La figure 1A illustre de façon schématique la position du point focal par rapport à une surface plane à usiner lors du déplacement du miroir galvanométrique de la tête laser dans un plan YZ perpendiculaire à la surface à traiter ;
[Fig 1B] La figure 1B illustre de façon schématique la variation du diamètre du faisceau sur la surface à traiter corrélée à la densité de puissance du faisceau, dans le cas particulier d'une absence de correction matérielle de la focalisation dans la tête laser ;
[Fig 1C] La figure 1C illustre de façon schématique la variation du diamètre du faisceau sur la surface à traiter corrélée à la densité de puissance du faisceau, dans le cas particulier où la tête laser intègre une lentille de correction de la focalisation ;
[Fig 1D] La figure 1D illustre de façon schématique la variation du diamètre du faisceau sur la surface à traiter corrélée à la densité de puissance du faisceau, avec lentille de correction de la focalisation et application d'une correction selon un mode de réalisation de l'invention ;
[Fig 2A] La figure 2A est une représentation schématique d'une nappe textile formée de fibres optiques ;
[Fig 2B] La figure 2B est une représentation agrandie d'une portion de la nappe textile de la figure 2A, selon une variante dans laquelle les fils de liage maintiennent individuellement chaque fibre optique ;
[Fig 2C] La figure 2C est une représentation agrandie d'une portion de la nappe textile de la figure 2A, selon une autre variante dans laquelle les fils de liage maintiennent des groupes de fibres optiques ;
[Fig 3] La figure 3 est une représentation schématique montrant la disposition de la nappe textile à traiter sur la table d'usinage, selon un mode de réalisation de l'invention ;
[Fig 4] La figure 4 est une représentation schématique d'un programme de traitement standard donnant la valeur de la puissance laser en fonction de la position de la zone à traiter sur le plan XY, représenté en niveaux de gris ;
[Fig 5] La figure 5 est une représentation schématique en niveaux de gris donnant la valeur de la correction en puissance fonction de la position de la zone à traiter sur le plan XY.

### Description détaillée de l'invention

Dans ce qui suit, il va être décrit des modes de réalisation particulièrement adaptés au traitement de surface de fibres optiques dont la gaine présente notamment une épaisseur comprise entre 4 µm et 8 µm, par exemple de l'ordre de 6µm. Bien entendu, l'invention peut être mise en oeuvre pour le traitement de toute surface plane pour lequel une finesse de gravure est recherchée.

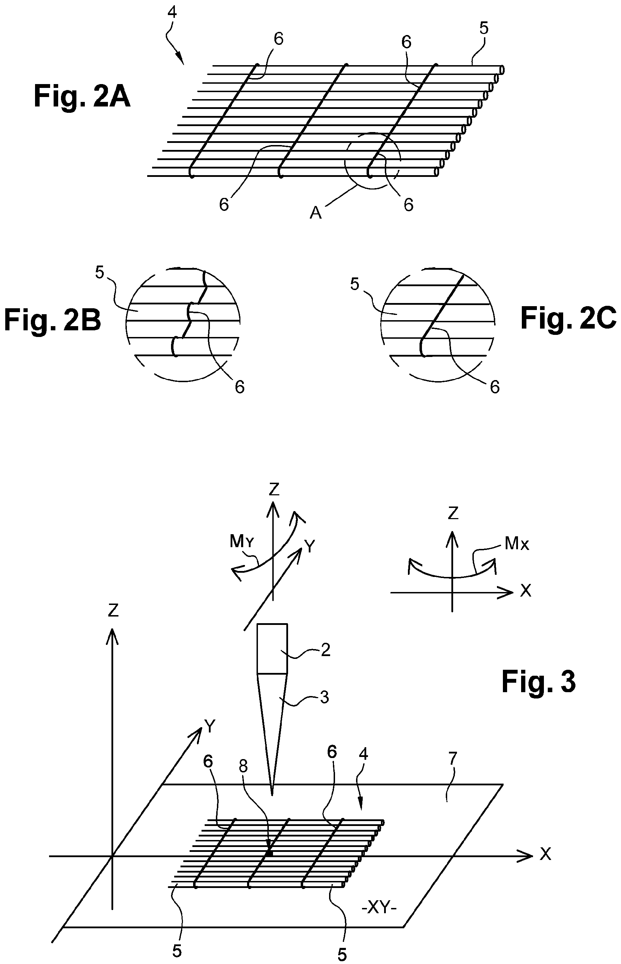

Une nappe textile 4 de fibres optiques à traiter est représentée à la figure 2A. Une telle nappe textile 4 est formée d'une pluralité de fibres optiques 5 maintenues parallèlement entre elles par des fils de liage 6. Selon une variante représentée sur la figure 2B, les fils de liage peuvent maintenir individuellement chaque fibre optique, on parle de liage ponctuel. Selon une autre variante, les fils de liage peuvent maintenir les fibres optiques par groupe, comme illustré à la figure 2C. Bien entendu, une combinaison de ces deux variantes est également possible.

En particulier, en référence à la figure 3, la nappe textile 4 est disposée sur une table d'usinage 7, au-dessus de laquelle est positionnée une tête laser 2 galvanométrique configurée pour diriger des faisceaux laser 3 en direction de la nappe textile 4. La table d'usinage 7 est contenue dans un plan XY définissant un premier axe X et un deuxième axe Y perpendiculaire au premier axe X. La nappe textile 4 est positionnée centrée sur un point de référence 8 de la table d'usinage 7 et les fibres optiques 5 sont positionnées sensiblement parallèlement au premier axe X de cette table d'usinage. La tête laser 2 est positionnée à l'aplomb de la table d'usinage à une distante constante du plan XY suivant un troisième axe Z perpendiculaire au plan XY. En outre, la tête laser 2 est initialement configurée pour se focaliser sur le point de référence 8. En fonctionnement, la tête laser pivote autour de l'axe Z et suit notamment un mouvement My dans le plan YZ et un mouvement Mx dans le plan XZ. Ainsi, les faisceaux 3 générés à une fréquence prédéfinie en sortie de la tête laser 2 altèrent la surface des fibres optiques par retrait de matière. En pratique, la tête laser peut être configurée pour émettre en régime continu ou en régime impulsionnel.

De manière générale, la tête laser 2 est contrôlée via un module de contrôle (non représenté) en fonction de paramètres laser prédéterminés, telles que par exemple la puissance des faisceaux en sortie de la tête laser, la vitesse de déplacement des miroirs du système optique galvanométrique, ou encore la fréquence de pulsation du laser. La puissance laser correspond à la densité de puissance en sortie de la tête laser et est généralement choisie en fonction des propriétés du matériau à usiner. La vitesse de déplacement du système optique comprend notamment la vitesse de déplacement permettant de diriger le faisceau suivant le premier axe X et la vitesse de déplacement permettant de diriger le faisceau suivant le deuxième axe Y.

Comme décrit ci-avant, avec une tête laser galvanométrique, la dérive de la distance du point focal par rapport à la surface plane à traiter, ici la surface de la nappe textile 4, engendre une dérive de la puissance laser appliquée sur cette surface.

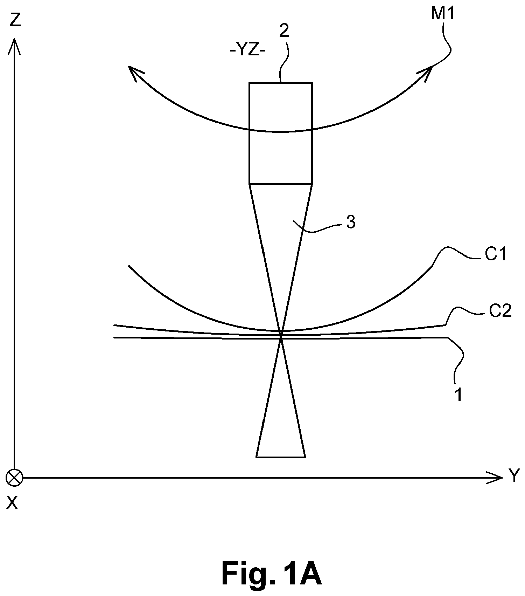

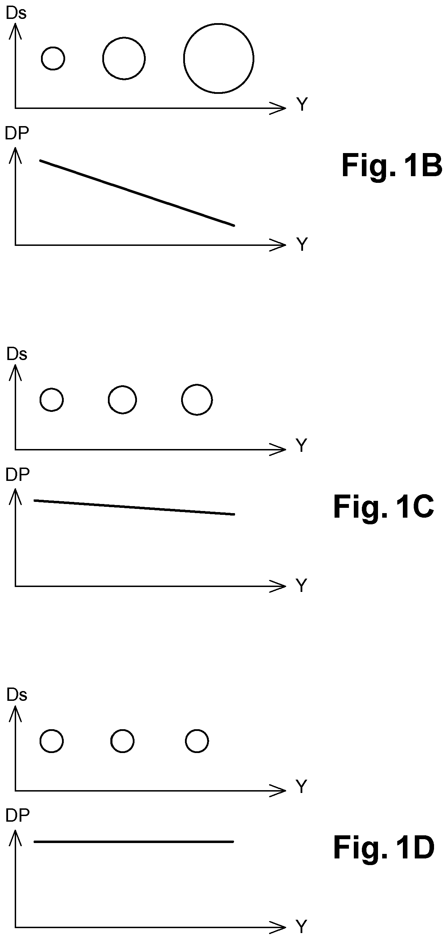

En effet, comme illustré sur la figure 1A, la position du point focal d'un faisceau 3 en sortie d'une tête laser 2 dans un plan YZ perpendiculaire à la surface plane 1 à usiner suit généralement une ligne courbe correspondant au mouvement du système optique rotatif, généralement des miroirs galvanométriques, en mouvement dans ce plan YZ. En particulier, en l'absence de lentille de correction du plan de focalisation, le point focal se déplace suivant la ligne courbe C1 correspondant au mouvement M1 du miroir galvanométrique de la tête laser 2 dans le plan YZ. Avec une lentille de correction du plan de focalisation, le point focal se déplace suivant la ligne courbe C2 correspondant un mouvement identique au mouvement M1 du miroir galvanométrique dans le plan YZ. On constate que la variation de la distance du point focal par rapport à la surface de travail est réduite mais pas suffisante. La variation correspondante du diamètre Ds du faisceau laser sur la surface à traiter, corrélée à la densité de puissance DP en fonction de la distance au centre de la table sur l'axe Y, est illustrée sur la figure 1B (cas sans correction matérielle du point de focalisation) et la figure 1C (cas avec correction matérielle du point de focalisation). De façon générale, on remarque une dérive maximale de la distance du point focal par rapport à la surface à traiter de plusieurs millimètres, notamment en bordure de la surface de traitement. En pratique, plus la surface à traiter est importante, plus la dérive est conséquente.

Ainsi, malgré la correction matérielle de la focalisation, pour une puissance laser donnée en sortie de la tête laser, une vitesse de déplacement donnée du système optique et une fréquence d'impulsion donnée, il existe toujours une légère variation de la distance du point focal par rapport à la surface plane. La puissance laser réellement appliquée sur la nappe textile 4 n'est donc pas identique en tout point de la surface de la nappe textile. Cette différence de traitement se traduit par une diffusion latérale non uniforme de la lumière injectée dans les fibres ainsi traitées.

Pour éviter une modification matérielle trop coûteuse de la tête laser, les paramètres laser sont donc ajustés de manière à compenser cette variation résiduelle de la position du point focale. L'ajustement des paramètres est réalisé en tenant compte de la taille du faisceau (ou spot), notamment son diamètre, sur le plan XY de la table d'usinage.

Selon un mode de réalisation, la table d'usinage ou la nappe textile est divisée en zones élémentaires dans le plan XY, autour du point de référence 8. Le traitement homogène de la surface de la nappe textile est considéré comme atteint lorsque les différentes zones élémentaires selon Y reçoivent sensiblement chacune une énergie moyenne sensiblement identique. Une tolérance de quelques dixièmes de pourcent est acceptée. Par exemple, la taille de chaque zone élémentaire peut être choisie sensiblement identique à la taille maximale des faisceaux sur le plan XY, et les paramètres sont ajustés afin que chacune des zones élémentaires reçoivent une énergie moyenne sensiblement identique. Un tel résultat est illustré à la figure 1D qui montre la variation correspondante du diamètre Ds du faisceau laser sur la surface à traiter, corrélée à la densité de puissance DP en fonction de la distance au centre de la table sur l'axe Y. Par exemple, chaque zone élémentaire peut être un carré dans lequel est circonscrit le spot du faisceau de plus grand diamètre.

Selon un autre mode de réalisation, les paramètres laser peuvent être modulés en fonction de la position angulaire des miroirs galvanométrique de la tête laser. En effet, le système optique comprend généralement deux miroirs galvanométriques. Un premier miroir est configuré pour pivoter autour d'un premier axe de pivot Px pour contrôler les faisceaux suivant le premier axe X et un deuxième miroir est configuré pour pivoter autour d'un deuxième axe de pivot Py pour contrôler les faisceaux suivant le deuxième axe Y. Dans la mesure où la position du faisceau (ou spot) sur le plan XY, et donc sa taille sur le plan XY ou encore sa densité de puissance, est corrélée à la position angulaire des miroirs, il est donc également possible de faire varier les paramètres de puissance et/ou de fréquence d'impulsion en fonction de la position angulaire de chacun des miroirs. Dans ce cas particulier, il est possible de s'affranchir de la division en zones élémentaires de la table d'usinage. La puissance laser est asservie en fonction de la position angulaire de chacun des miroirs. Par ailleurs, la fréquence d'impulsion peut également être asservie en fonction de la position angulaire de chacun des miroirs. Dans ce cas particulier, il est possible de réaliser une matrice ou une courbe donnant la valeur de la densité de puissance à appliquer en fonction du diamètre du spot du faisceau, suivant par exemple la formule suivante :
DP_{c} = P/Ø_{c} et DP_{b} = P/Ø_{b}
P est la puissance du laser ;
Ø_{c} est le diamètre de spot au centre ;
Ø_{b} est le diamètre de spot en bordure ;
DP_{c} est la densité de puissance appliquée au centre de la surface de traitement ;
DP_{b} est la densité de puissance appliquée en bordure de la surface de traitement.

Ainsi, on souhaite obtenir DP_{c} = DP_{b} soit P/Ø_{c} = P/Øb. Dans la mesure où Ø_{c} ≠ Ø_{b}, l'égalité entre la densité de puissance appliquée au centre et en bordure ne peut être obtenue que par l'application d'un facteur d'ajustement α = Ø_{b} / Ø_{c} sur DP_{b}. En d'autres termes, il faudra donc multiplier le réglage de la puissance en bordure par le facteur d'ajustement α pour obtenir une densité de puissance égale à celle en position centre (DP_{c} = α DP_{b}). Bien entendu, dans cette hypothèse, la possible variation du diamètre de chaque spot, et donc de la surface impactée, est considérée comme un facteur mineur du second ordre par rapport à celle de la densité de puissance.

Quel que soit le mode de réalisation envisagé, la modulation des paramètres laser peut être réalisée sur uniquement l'un des axes du plan XY ou sur les deux axes X et Y.

Par exemple, l'homogénéité du traitement peut être obtenue par ajustement de la puissance laser sur uniquement l'un des premier et deuxième axes X et Y du plan XY, par exemple sur le premier axe X. Ainsi, la vitesse de déplacement du système optique et la fréquence d'impulsion laser sont maintenues constantes durant tout le traitement. En revanche, la puissance en sortie de la tête laser est modulée en fonction soit de la position de la zone élémentaire à traiter sur le premier axe X, soit de la position du miroir galvanométrique contrôlant la direction du faisceau suivant le premier axe X.

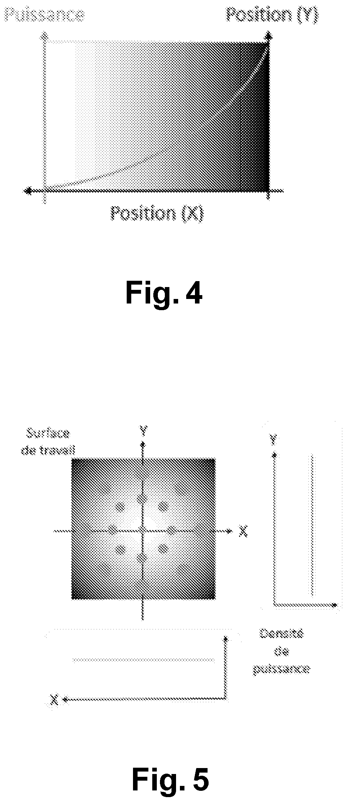

La figure 4 illustre un exemple de valeurs de puissance à appliquer sous la forme d'un nuancier de gris. Chaque teinte de gris représente un pourcentage de la valeur de la puissance maximale que peut générer le laser. Ainsi, sur le deuxième axe Y, les puissances appliquées sont sensiblement constantes, alors que sur le premier axe X, les valeurs sont ajustées en fonction de la position du faisceau.

En fonction de la taille de la nappe à traiter, la compensation sur un seul des axes X et Y peut ne pas suffire. Par exemple, pour une nappe de dimensions 800x800 mm, on constate une différence de traitement entre les fibres optiques situées au centre de la nappe et celles située en bordure de la nappe suivant le premier axe X. En d'autres termes, le traitement n'est pas homogène suivant le deuxième axe Y. Il est donc nécessaire de réaliser un ajustement des paramètres également sur le deuxième axe Y. La figure 5 illustre les valeurs de puissance appliquées, toujours sous la forme d'un nuancier de gris, en fonction de la position de la zone à traiter dans le plan XY, permettant d'appliquer une densité de puissance sensiblement constante sur toute la surface à traiter. Un gris clair correspond à une faible correction et un gris foncé correspond à une forte correction.

Sur le même principe, il est bien entendu possible de maintenir la puissance constante et de moduler les autres paramètres laser. En particulier, il est possible de faire varier la vitesse de déplacement du système optique, autour de l'axe X et/ou Y, et/ou la fréquence d'impulsion du laser, et donc la densité de points d'impact du faisceau dans chaque zone élémentaire.

La présente invention permet ainsi de réaliser des textiles lumineux à base de fibres optiques présentant des aspérités de surface obtenues via le procédé de fabrication de l'invention. Un tel textile lumineux peut être utilisé pour une diffusion latérale de la lumière et/ou pour la réalisation de système de détection ou de capteur exploitant la variation d'intensité lumineuse transmise ou capté latéralement par les fibres optiques.

## Revendications

1. Procédé de traitement par laser d'une surface sensiblement plane d'un produit, le procédé comprenant :
- la disposition du produit sur une table d'usinage (7) située dans un plan XY défini par un premier axe X et un deuxième axe Y perpendiculaire au premier axe X ;
- le positionnement d'une tête laser à l'aplomb d'un point de référence (8) de la table d'usinage (7), la tête laser (2) étant configurée pour émettre des faisceaux à une fréquence prédéterminée et comprenant au moins un système optique rotatif configuré pour diriger de façon contrôlée les faisceaux vers la table d'usinage (7) ;
- le traitement de l'ensemble de ladite surface à traiter du produit par application des faisceaux sur la surface à traiter simultanément au mouvement du système optique suivant des paramètres laser prédéterminés ;
dans lequel :
- le produit est une nappe textile (4) formée de fibres optiques (5) maintenues parallèlement entre elles par des fils de liage (6), la nappe textile (4) étant positionnée centrée sur le point de référence (8) et les fibres optiques (5) étant positionnées sensiblement parallèlement au premier axe X de la table d'usinage (7), les faisceaux appliqués lors du traitement altérant la surface des fibres optiques (5) par retrait de matière ;
- la surface à traiter est divisée en une pluralité de zones élémentaires dans le plan XY, et en ce que le procédé comprend en outre l'application d'une correction consistant à faire varier un ou une combinaison des paramètres laser suivants, en fonction de la position de chaque zone élémentaire dans le plan XY:
- la puissance des faisceaux générés ;
- la vitesse de déplacement du système optique ;
- la fréquence d'impulsion des faisceaux générés,
toutes les zones élémentaires de la surface à traiter recevant une énergie moyenne prédéterminée sensiblement identique.

2. Procédé selon la revendication 1, dans lequel la puissance moyenne reçue par chaque zone est obtenue par modulation de la vitesse de déplacement du système optique, sur le premier axe X et/ou le deuxième axe Y, la vitesse de déplacement étant décroissante au fur et à mesure de l'éloignement des zones du point de référence (8).

3. Procédé selon la revendication 1, dans lequel chaque zone élémentaire possède des dimensions sensiblement identiques au diamètre maximal du faisceau sur la surface à traiter, la correction consistant en la modulation de la puissance à appliquer en fonction de la position de la position de la zone élémentaire dans le plan XY, la vitesse de déplacement du système optique étant maintenue sensiblement constante, la puissance à appliquer étant sensiblement croissante avec l'éloignement des zones élémentaires du point de référence (8).

4. Procédé selon la revendication 3, dans lequel chaque zone peut avoir des dimensions sensiblement égales au diamètre maximal du faisceau sur la surface à traiter, la correction consistant à ajuster le nombre d'impact des faisceaux en fonction de la position de la zone élémentaire dans le plan XY, la puissance de chaque faisceau étant sensiblement constante et la vitesse de déplacement étant sensiblement constante, le nombre d'impacts étant croissant avec l'éloignement des zones élémentaires du point de référence (8).

5. Procédé selon l'une des revendications 1 à 4, dans lequel pendant le traitement, la table d'usinage (7) est mobile en translation suivant l'axe X, la tête laser est de préférence fixe en translation suivant les premier et deuxième axes X et Y.

6. Procédé selon l'une des revendications 1 à 5, dans lequel les fils de liage (6) s'étendent sensiblement parallèlement au deuxième axe Y, et le procédé comprenant en outre une étape de sectionnement des fils de liage (6) au niveau des lisières de la nappe textile (4).

## Patentansprüche

1. Verfahren zur Laserbehandlung der Oberfläche eines im Wesentlichen ebenen Produktes, dabei umfasst das Verfahren:
- Das Auflegen eines Produktes auf eine Werkbank (7), die sich in einer Ebene XY befindet, definiert durch eine erste X-Achse und eine Y-Achse senkrecht zur ersten X-Achse;
- die Positionierung eines Lasers, senkrecht zu einem Referenzpunkt (8) der Werkbank (7), der Laserkopf (2) ist dazu konfiguriert, Strahlen mit einer vorher festgelegten Frequenz auszusenden, und enthält mindestens ein drehbares optisches System, dazu konfiguriert, die Strahlen in kontrollierter Art und Weise auf die Werkbank (7) zu richten.
- die Behandlung der gesamten erwähnten zu behandelnden Produktoberfläche durch Anwendung von Strahlen auf die zu behandelnde Oberfläche simultan zur Bewegung des optischen Systems nach vorher festgelegten Laserparametern;
bei dem:
- das Produkt eine Textilmatte (4) ist, gebildet aus optischen Fasern (5), die durch Bindefäden (6) parallel gehalten werden, die Textilmatte (4) ist dabei zentriert auf den Referenzpunkt (8) positioniert und die optischen Fasern (5) sind im Wesentlichen parallel zur ersten X-Achse der Werkbank (7) positioniert, die bei der Behandlung angewandten Strahlen verändern dabei die Oberfläche der optischen Fasern (5) durch Entfernung von Material;
- die zu behandelnde Oberfläche in mehrere elementare Zonen in der Ebene XY unterteilt wird und das Verfahren außerdem eine Korrekturanwendung umfasst, die darin besteht, einen oder mehrere der folgenden Laserparameter zu verändern, in Abhängigkeit von der Position jeder elementaren Zone in der Ebene XY:
- die Leistung der erzeugten Strahlen;
- die Bewegungsgeschwindigkeit des optischen Systems;
- die Impulsfrequenz der erzeugten Strahlen,
- alle elementaren Zonen der zu behandelnden Oberfläche erhalten eine durchschnittliche Energie, die im Wesentlichen identisch ist.

2. Verfahren nach Anspruch 1, bei dem die durchschnittliche, von jeder Zone empfangene Leistung durch Modulation der Bewegungsgeschwindigkeit des optischen Systems, auf der ersten X-Achse und/oder der zweiten Y-Achse erhalten wird, die Bewegungsgeschwindigkeit nimmt dabei, entsprechend der Entfernung der Zonen vom Referenzpunkt (8) ab.

3. Verfahren nach Anspruch 1, bei dem jede elementare Zone Maße besitzt, die im Wesentlichen identisch sind mit dem maximalem Durchmesser der Strahlen auf der zu behandelnden Fläche, die Korrektur besteht dabei in der Modulation der Leistung, anzuwenden in Abhängigkeit von der Position der elementaren Zone in Ebene XY, die Bewegungsgeschwindigkeit des optischen Systems wird im Wesentlichen konstant gehalten, die anzulegende Leistung steigt im Wesentlichen mit der Entfernung der elementaren Zonen vom Referenzpunkt (8) an.

4. Verfahren nach Anspruch 3, bei dem jede Zone Maße haben kann, die im Wesentlichen gleich dem maximalen Durchmesser der Strahlen auf der zu behandelnden Oberfläche sind, die Korrektur besteht dabei in einer Anpassung der Auftreffpunkte der Strahlen in Abhängigkeit von der Position der elementaren Zone in der Ebene XY, die Leistung jedes Strahls ist im Wesentlichen konstant und die Bewegungsgeschwindigkeit ist im Wesentlichen konstant, die Zahl der Auftreffpunkte wächst mit der Entfernung der elementaren Zonen vom Referenzpunkt (8).

5. Verfahren nach einem der Ansprüche 1 bis 4, bei dem während der Behandlung die Werkbank (7) in Querrichtung entlang der X-Achse mobil ist, der Laserkopf ist vorzugsweise in Querrichtung entlang der ersten und zweiten X und Y fest.

6. Verfahren nach einem der Ansprüche 1 bis 5, bei dem die Bindefäden (6) im Wesentlichen parallel zur zweiten Y-Achse liegen, außerdem umfasst das Verfahren einen Schritt des Trennens der Bindefäden (6) in Höhe der Kanten der Textilmatte (4).

## Claims

1. Method for laser treatment of a substantially planar surface of a product, the method comprising:
- arranging the product on a working table (7) located in a plane XY which is defined by a first axis X and a second axis Y that is perpendicular to the first axis X;
- positioning a laser head vertically in line with a reference point (8) of the working table (7), the laser head (2) being configured to emit beams at a predetermined frequency and comprising at least one rotatable optical system which is configured to direct the beams in a controlled manner towards the working table (7),
- treating the whole surface of the product to be treated by applying beams onto the surface to be treated simultaneously to the movement of the optical system in accordance with predetermined laser parameters;
wherein
- the product is a textile web (4) formed of optical fibres (5) held parallel to each other by binding threads (6), the textile web (4) being positioned centred with respect to the reference point (8) and the optical fibres (5) being positioned substantially parallel to the first axis X of the working table (7), the beams applied during the treatment altering the surface of the optical fibres (5) by removal of material;
- the surface to be treated is divided into a plurality of elementary zones in the XY plane, and the method further comprises applying a correction consisting in varying one or a combination of the following laser parameters, as a function of the position of each elementary zone in the XY plane:
- the power of the beams generated;
- the movement speed of the optical system;
- the pulse frequency of the generated beams,
all the elementary zones of the surface to be treated receiving a substantially identical predetermined average energy.

2. Method of claim 1, wherein the average power received by each zone is obtained by modulating the movement speed of the optical system, on the first X-axis and/or the second Y-axis, the movement speed decreasing as the zones move away from the reference point (8).

3. Method according to claim 1, wherein each elementary zone has dimensions substantially identical to the maximum diameter of the beam on the surface to be treated, the correction consisting in modulating the power to be applied as a function of the position of the elementary zone in the XY plane, the speed of movement of the optical system being kept substantially constant, the power to be applied increasing substantially as the zones move away from the reference point (8).

4. Method according to claim 3, wherein each zone may have dimensions substantially equal to the maximum diameter of the beam on the surface to be treated, the correction consisting in adjusting the number of impacts of the beams as a function of the position of the elementary zone in the XY plane, the power of each beam being substantially constant and the movement speed being substantially constant, the number of impacts increasing as the zones move away from the reference point (8).

5. Method according to one of Claims 1 to 4, wherein during the treatment, the working table (7) is movable in translation along the X axis, the laser head is preferably fixed in translation along the first and second X and Y axes.

6. Method according to one of claims 1 to 5, wherein the binding threads (6) extend substantially parallel to the second axis Y, and the method further comprising a step of cutting the binding threads (6) at the edges of the textile web (4).
